# EUROPEAN PATENT APPLICATION

(11) **EP 1 754 782 A1**
(43) Date of publication of application: **21.02.2007**
(21) Application number: 05751474.7
(22) Date of filing: 03.06.2005
(51) Int. Cl.: C12M 1/00

(54) **MICROREACTOR ENHANCING EFFICIENCY OF LIQUID MIXING AND REACTION**

(30) Priority: 08.06.2004 JP 2004169912
(71) Applicant: Konica Minolta Medical & Graphic, Inc., Tokyo 163-0512 (JP)
(72) Inventor: SANDO, Yasuhiro, Konica Minolta Tec. Ctr, Inc, Takatsuki-shi, Osaka 569-8503 (JP); UEDA, Eiichi, Konica Minolta Med. & Graphic, Inc, Hino-shi, Tokyo 191-8511 (JP); NAKAJIMA, Akihisa, Konica Minolta M.&G. Inc., Hino-shi, Tokyo 191-8511 (JP); HIGASHINO, Kusunoki, Konica Minolta Tec. Ctr, Inc, Takatsuki-shi, Osaka 569-8503 (JP); ISHIDA, Nobuhisa, Konica Minolta Tec. Ctr., Inc., Takatsuki-shi, Osaka 569-5203 (JP)
(74) Representative: Henkel, Feiler & Hänzel
(86) International application number: PCT/JP2005/010256
(87) International publication number: WO 2005/121308

(57) **Abstract**

At least two liquids including a reaction reagent are fed by a micro-pump and are merged in a minute flow path 4. After each liquid has been diffused and mixed, liquid is fed into a wide liquid reservoir 5 arranged on the terminal of a minute flow path 4 on the downstream side, and reaction is carried out in the aforementioned liquid reservoir 5. It is also possible to arrange such a configuration that merged liquids are circulated in a loop-like minute flow path or merged liquids are moved back and forth in the minute flow path. In the reaction of gene amplification, while reaction is performed, reagent is gradually fed into the minute flow path from a divergent flow path, diverged from the aforementioned minute flow path, to which a sample is fed.

## Description

### TECHNICAL FIELD

The present invention relates to a micro-reactor, particularly to a micro-reactor capable of ensuring effective mixing of two or more liquids and efficient reaction, and a bioreactor preferably applied to genetic screening.

### BACKGROUND ART

By free use of micromachine technology and micromachining technology, development efforts have been made to create a system wherein the prior art apparatus and means for preparation of a sample, chemical analysis and chemical synthesis (e.g. a pump, valve, flow path and sensor) are formed into minute structures, and are integrated into one chip. This is called µ-TAS (Micro Total Analysis System), bioreactor, lab-on-chip or biochip. Its application is anticipated in the field of medical examination, diagnosis, environmental measurement and agricultural production. As can be seen especially in the field of genetic screening, when a complicated process, advanced manual skill and machine operation technique are involved, an automated, high-speed, simplified micronized analysis system bring about immeasurable advantages of permitting analysis independently of time and place, in addition to various advantages in terms of costs, required quantity of samples and required time.

Quantitativeness of the analysis, precision of analysis and economy are major factors in the development of the aforementioned analysis chip capable of producing results independently of place. To achieve this purpose, it is important to establish a highly reliable liquid feed system of simple structure. Thus, there has been an active demand for a reliable, high-precision micro fluid control device. The present inventors have already proposed a micro pump system capable of meeting such requirements (Patent Documents 1 and 2).

One of the most important tasks of the micro-reactor is to provide a method for analysis capable of minimizing the amount of the required sample and reagent. To achieve this purpose, the liquids (samples or reagents) must be mixed effectively in a mixing flow path or a reaction chamber. It may be possible to separately install a mixing means for this purpose, but this method is subjected to restrictions of chip dimensions and configuration. Mixing and reaction in a minute flow path cause diffusion of a reaction substance to be controlled. Even in a long flow path, a long diffusion distance of a substance is required to reach the step of reaction. Especially when two or more liquids having substantially different concentrations, reaction efficiency is seriously affected by the level of mixing skill. Thus, there has been a long felt need for a simplified flow path capable of effective mixing and reaction of two or more liquids.
[Patent Document 1] Official Gazette of Japanese Patent Tokkai 2001-322099
[Patent Document 2] Official Gazette of Japanese Patent Tokkai 2004-108285
[Non-Patent Document 1] "DNA Chip Technology and its Application", "Protein, Nucleic Acid and Enzyme", Vol. 43, No. 13 (1998) Written by Fusao Kimizuka and Ikunosuke Kato, Published by Kyoritsu Shuppan.

### DISCLOSURE OF THE INVENTION

In view of the prior art described above, it is an object of the present invention to provide a micro-reactor capable of highly efficient mixing of two or more liquids and highly effective reaction thereof.

Another object of the present invention is to provide a genetic screening micro-reactor equipped with a flow path system suited for DNA amplification.

The above object can be attained by the following structure.

A micro-reactor, comprising:
a flow jointing section to joint flows of at least two kinds of liquids including a reacting reagent by feeding the two kinds of liquids with a micro pump;
a mixing flow path connected to a downstream end of the flow jointing section so as to diffuse and mix the liquids; and
a reaction advancing section to advance the reaction among the mixed liquids.

### BRIEF DESCRIPTION OF THE DRAWINGS

Fig. 1 is a diagram representing the arrangement of a flow path in a micro-reactor as a first embodiment of the present invention;
Fig. 2 is a diagram representing the liquid control system of the micro-reactor given in Fig. 1;
Fig. 3 is a diagram showing the arrangement of the flow path for feeding liquids directly from a confluence section to a liquid reservoir;
Fig. 4 is a diagram representing the arrangement of the flow path in a micro-reactor as a second embodiment of the present invention;
Fig. 5 is a diagram representing the liquid feed control system of a micro-pump and valve given in Fig. 4;
Fig. 6 is a diagram showing the difference in the flow velocity in the central portion of the minute flow path and that in the vicinity of the wall surface;
Fig. 7 is a diagram representing the configuration of a flow path in a micro-reactor as a third embodiment of the present invention;
Fig. 8 is a diagram representing the liquid feed control system in the micro-reactor given in Fig. 7;
Fig. 9 is a diagram representing the configuration of a flow path in a micro-reactor as a fourth embodiment of the present invention;
Fig. 10 is a diagram showing a variation of the micro-reactor as a fourth embodiment of the present embodiment;
Fig. 11 is a diagram showing the arrangement of flow path for feeding liquids from the confluence section to the minute flow path, and for mixing them and causing reaction in the minute flow path;
Fig. 12(a) is a cross sectional view showing an example of a piezo-pump, Fig. 12(b) a top view thereof, and Fig. 12(c) is a cross sectional view showing another example of the piezo-pump;
Figs. 13(a) and (b) are diagrams showing how the reagent and sample are fed from the upstream portion of a Y-shaped divergent flow path, and how they are merged;
Fig. 14 is a cross sectional view representing a hydrophobic valve along the flow path;
Fig. 15 is a cross sectional view representing an example of the active valve arranged in the flow path, wherein Fig. 15(a) shows that the valve is open, while Fig. 15(b) shows that the valve is closed;
Figs. 16(a) and (b) are cross sectional views representing an example of a check valve arranged in the flow path; and
Fig. 17 is a drawing showing an example of the configuration around the reagent storage section and pump.

### BEST MODE FOR CARRYING OUT THE INVENTION

The micro-reactor of the present invention comprises:
a confluence section for feeding at least two liquids including a reaction reagent by a micro pump and helping them meet each other;
a minute flow path, arranged forwardly of the aforementioned confluence section, for helping diffusion and mixing of each of the aforementioned liquids; and
a liquid reservoir, arranged forwardly of the end of the aforementioned minute flow path on the downstream side and composed of a space wider than the minute flow path, for storing the liquids having been diffused and mixed in the aforementioned minute flow path.

In the aforementioned invention, a limited width of the minute flow path permits quick mixing of liquids through diffusion from the confluence section. Subsequent to sufficient mixing, reaction is applied in a wider liquid reservoir. Supply of one reaction reagent to another or supply of reaction reagent to the portion currently undergoing reaction is carried out from two-dimensional direction -- not merely from one-dimensional direction along the flow path as in the aforementioned minute flow path.

Therefore, this arrangement substantially increases the probability of two reaction reagents meeting each other, with the result that reaction speed is increased.

The micro-reactor of the present invention is provided with a control means for controlling the aforementioned micro-pump so as to temporarily suspend the feed of merged liquids in the minute flow path, after the aforementioned liquids from the confluence section have been fed to the minute flow path by the aforementioned micro-pump, immediately before the liquid is fed into the liquid reservoir.

The liquid feed suspension time using the aforementioned control means is preferably 0.5 sec. through 10 min.

In the present invention, liquid feed is suspended temporarily before the merged liquids in the minute flow path are fed into the liquid reservoir, and the liquids in the minute flow path are left to diffuse for a predetermined period of time. Subsequent to sufficient mixing, mixed liquids are fed to the liquid reservoir. This procedure ensures effective reaction in the liquid reservoir.

To suspend the liquid feed temporarily, it is also possible to arrange such a configuration that the micro-pump operation is stopped on the temporary basis, and is restarted after the lapse of a predetermined time. Alternatively, it is also possible to make the following arrangements: A hydrophobic valve (to be described later) is installed in the vicinity of the end of the minute flow path on the downstream side. After liquids have been stopped, a drive voltage is applied on continuously for some time to the pump at such a pressure that prevents liquids from moving, without shutting out the pump drive voltage. After the lapse of a predetermined time, the drive voltage is increased so that the liquid pressure will exceed the permissible level of the hydrophobic valve. Then the mixed liquids are fed to the liquid reservoir.

Installation of a hydrophobic valve in the aforementioned manner prevents the liquid from moving freely due to the capillary pressure when the pump drive has stopped.
The micro-reactor of the present invention comprises:
a confluence section for feeding at least two liquids including a reaction reagent by a micro pump and helping them meet each other;
a loop-like minute flow path, arranged downstream from the aforementioned confluence section, wherein mutual reaction of the aforementioned reaction reagents is carried out;
valves arranged upstream and downstream from the loop-like minute flow path; and
a circulatory micro-pump, arranged in the loop-like minute flow path, for circulating the merged liquids fed from the confluence section, in the loop-like minute flow path when the loop is closed by the valve.

According to the aforementioned invention, liquids are fed from the confluence section into the loop-like minute flow path and are circulated with the loop closed by the valve. This arrangement permits active mixing of the confluent liquid in the loop. At the same time, supply of one reaction reagent to another or supply of reaction reagent to the portion currently undergoing reaction is promoted by the gradient representing the flow velocity of the liquid between the center of the flow path and the vicinity of the wall surface. In this manner, the efficiency in the mixture of liquids and diffusion of reaction reagents is improved by circulation, with the result that reaction speed is increased.

In conformity to the concentration of the sample, the circulation speed and time are controlled, whereby reaction efficiency can be placed under control.
The micro-reactor of the present invention comprises:
a confluence section for feeding at least two liquids including a reaction reagent by a micro pump and helping them meet each other;
a minute flow path, arranged forwardly of the aforementioned confluence section, for allowing reaction of the aforementioned liquids to be carried out; and
control means for controlling the micro-pump so as to switch the feed direction of merged liquids fed from the confluence section into the minute flow path and to move the merged liquid back and forth repeatedly in the minute flow path.

According to the aforementioned invention, liquids in the minute flow path are moved back and forth by one or more of the pumps for feeding liquids including reaction reagents. This method ensures active mixing of merged liquids in the minute flow path. At the same time, supply of one reaction reagent to another or supply of reaction reagent to the portion currently undergoing reaction is promoted by the gradient representing the flow velocity of the liquid between the center of the flow path and the vicinity of the wall surface. In this manner, the efficiency in the mixture of liquids and diffusion of reaction reagents is improved by the back-and-forth motion of merged liquids in the minute flow path, with the result that reaction speed is increased.

Active mixing is enabled by the micro-pump for feeding the liquid containing the reaction reagent, and a separate micro-pump for mixing need not be installed in the flow path.
The micro-reactor of the present invention comprises:
a minute flow path to which the DNA solution containing DNA as an object to be amplified is fed by the micro-pump; and
a plurality of divergent flow paths, diverged from the aforementioned minute flow path, to which reaction reagent is fed by the micro-pump;
wherein the reaction reagents from the divergent flow paths are sequentially merged with the DNA solution fed through the minute flow path, and reaction of gene amplification is carried out.

According to the flow path of the micro-reactor of the present invention, in the reaction that proceeds based on the DNA as an object for amplification having a low concentration as in the gene amplification reaction in particular and the amplified DNA obtained from this DNA, the concentration of the DNA as the starting point for reaction may be reduced too much once reaction reagent is mixed with the DNA solution. To prevent this, reaction is carried out in such a way that reaction reagent is added gradually and the concentration of the DNA as the basis is increased by amplification. This arrangement improves the reaction efficiency.

The micro-reactor of the present invention comprises a control means for controlling each micro-pump so that the aforementioned DNA solution and reagent solution are merged at the confluence section; and when this confluence section has reached just before the next confluence section, the feed of the merged liquids is suspended on the temporary basis.

According to the aforementioned invention, the DNA solution and reagent solution are converged in the minute flow path through the confluence section. After this merged liquid has been fed just before the confluence section, liquid feed is suspended so that a sufficient time will be provided to carry out reaction. This arrangement ensures reaction efficiency.

A micro-pump preferably used in the aforementioned invention comprises:
a first flow path for allowing the flow path resistance to change in conformity to differential pressure;
a second flow path where the percentage of changes in the resistance of the flow path in response to changes in differential pressure is smaller than that of the first flow path;
a pressure chamber connected to the first and second flow paths;
an actuator for changing the internal pressure of the pressure chamber; and
a drive apparatus for driving the actuator.

The micro-reactor according to each of the aforementioned inventions is preferably structured in such a way that the operation of the actuator is controlled by the drive signal from the drive apparatus of the micro-pump, whereby solutions containing the compound subjected to reaction are mixed at a desired percentage.

The micro-reactor according to each of the aforementioned inventions is preferably structured in such a way that a DNA storage section for storing the aforementioned DNA solution, and a reagent storage section for storing the reagent solution are arranged in each flow path located upstream from the confluence section for merging between the DNA solution containing DNA as an object to be amplified and reagent solution; and the aforementioned micro-pumps are connected to the pump connections so that drive solution is supplied from each micro-pump, whereby the DNA solution and reagent solution are pushed out and merged to initiate gene amplification reaction.

The micro-reactor of the aforementioned invention is preferably used in the reaction of gene amplification to be carried out by mixing the sample, the DNA solution extracted from the sample or the cDNA solution synthesized by reverse transcription from the RNA extracted from the sample, and the reagent solution including the reaction reagent.

The micro-reactor of the present invention is applicable in the field of genetic screening, drug sensitivity test, bacteriological examination, virus examination, biochemical examination of blood and urine, environmental inspection such as measurement of dioxin concentration in the environment, development of new drugs and chemical reaction.

The micro-reactor of the present invention ensures highly efficient mixing of two or more liquids and effective reaction.

Referring to the drawings, the following describes the embodiment of the present invention: The arrangement of the present invention is suited for effective mixing of two or more liquids of substantially different concentration, and to the reaction to be carried out based on the concentration of the substance having a lower concentration level, or based on the substance having a lower concentration level and the product obtained from the reaction. The arrangement of the present invention is especially suited for reaction of gene amplification. The micro-reactor of the present invention permits a desired deformation and modification in various forms of embodiment within the spirit of the present invention. Such deformation and modification are included in the scope of the present invention.

The following description of embodiments uses an example of a micro-reactor for genetic screening to perform gene amplification reaction and detection of the sample and reagent according to the ICAN (Isothermal chimera primer initiated nucleic acid amplification) process.

### FIRST EMBODIMENT

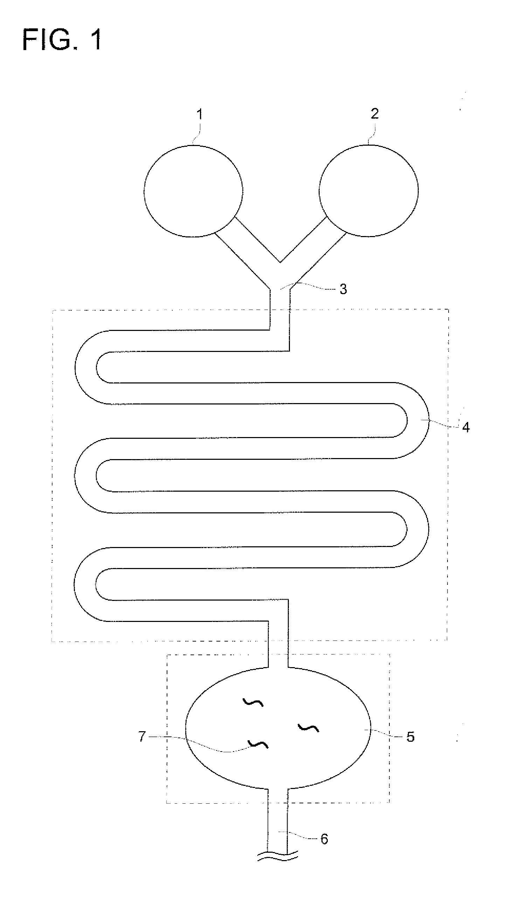

Fig. 1 is a diagram representing the arrangement of a flow path for mixing and reaction between a sample and a reagent in a micro-reactor as an embodiment of the present invention. As shown in Fig. 1, a sample fed from a sample storage section 1 by a micro-pump (not illustrated) and a reagent solution fed from a reagent storage section 2 by a micro-pump (not illustrated) are merged in the confluence section 3 of the Y-shaped flow path, and are fed to a succeeding minute flow path 4.

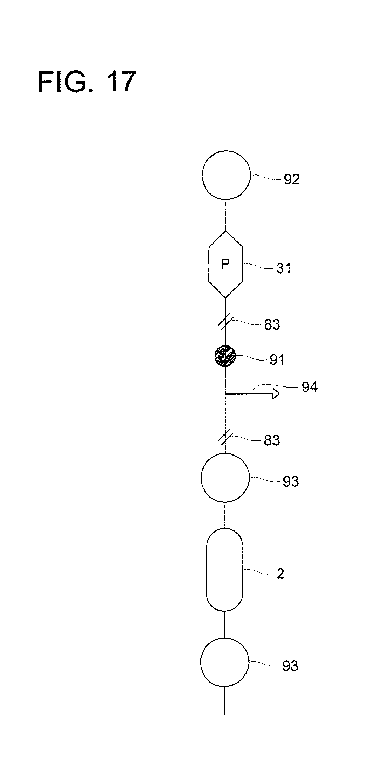

The minute flow path 4 has a width of 0.2 mm and a depth of 0.2 mm, for example, and the distance to the liquid reservoir 5 in the diagram where ICAN reaction is carried out is 125 mm.
The reagent and sample is fed into the minute flow path by the micro-pump connected to the pump connecting section arranged upstream from the storage section. Fig. 17 shows an example of the configuration around the reagent storage section and micro-pump. A sealing liquid storage section 93 is arranged on each side of the reagent storage section 2 in the direction of flow path to protect against leakage and contamination of reagent before use. A pump 31 is connected through a pump connection section 91. The drive solution stored in a drive solution storage section 92 is fed to the downstream side by the pump 31, whereby the reagent in the reagent storage section together with sealing liquid is pushed out and fed.

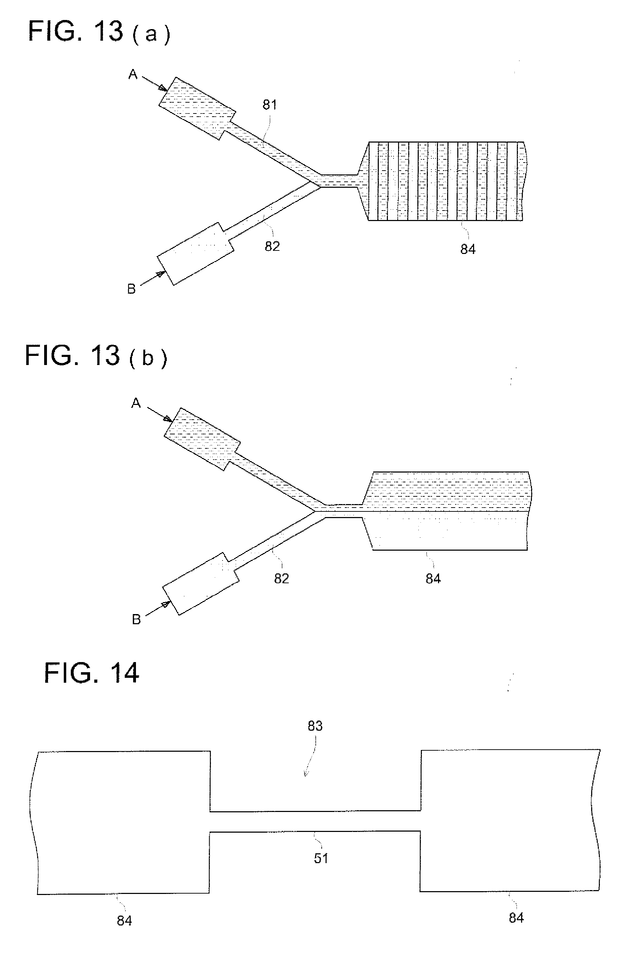

Numeral 83 denotes a hydrophobic valve having the structure shown in Fig. 14. The hydrophobic valve 83 blocks the passage of liquid until the liquid feed pressure in the positive direction reaches a predetermined level, and permits the passage of liquid when the liquid feed pressure in excess of the predetermined level is applied. As illustrated, the hydrophobic valve 83 is composed of the portion where the flow path diameter is reduced. This arrangement prevents the liquid having reached the flow path 51 from flowing to the other end. This flow path 51 is formed to have the approximate size of 200 µm x 30 µm in contrast to the size of 200 µm x 200 µm when serially connected on both sides.

In order to push the liquid out of the terminal of the reduced-diameter flow path 51 into the large-diameter flow path 84, a predetermined liquid feed pressure must be applied for surface tension. Accordingly, the stop and passage of the liquid can be controlled by the pump pressure from the micro-pump. For example, this arrangement makes it possible to suspend the movement of the liquid temporarily in a predetermined position of the flow path, so that feed of the liquid to the flow path located forwardly of this position can be restarted at timed intervals.

If required, the inner surface of the reduced-diameter flow path 51 can be provided with water-repellent coatingfluorine-based coating, for example.
An air purge flow path 94 is arranged in the flow path between the pump connection section 91 and the reagent storage section 2. The air purge flow path 94 diverges from the flow path between the pump connection section 91 and reagent storage section 2, and the terminal thereof is open. This air purge flow path 94 is used to remove air bubble from the flow path, for example, at the time of connecting the pump.

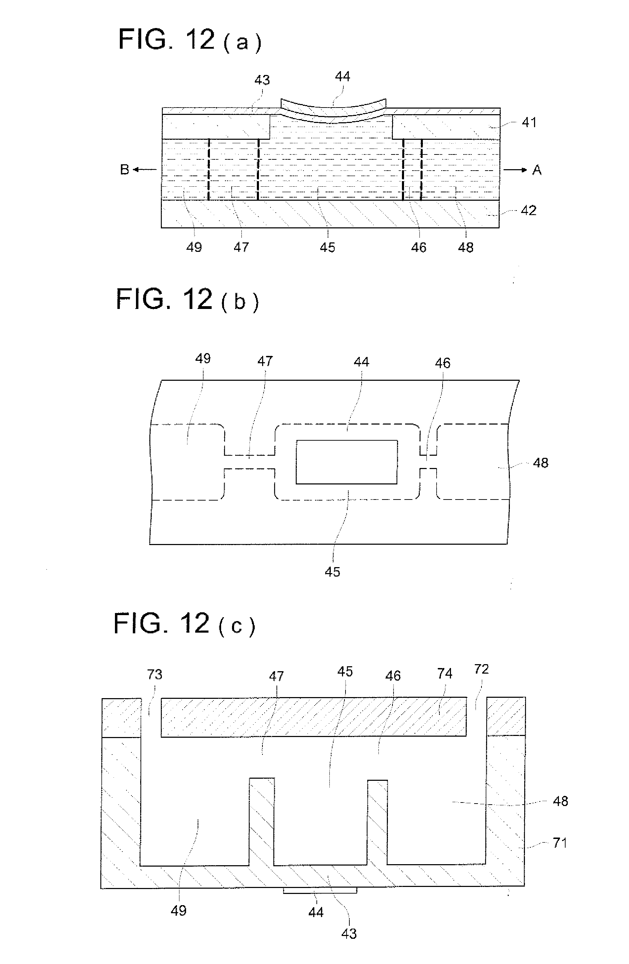

A piezo pump is preferably used as a micro-pump. Fig. 12(a) is a cross sectional view showing an example of this pump. Fig. 12(b) is a top view thereof. This micro-pump is provided with a first liquid chamber 48, first flow path 46, pressure chamber 45, second flow path 47, a substrate 42 with a second liquid chamber 49 formed thereon, an upper substrate 41 laminated on the substrate 42, a vibration plate 43 laminated on the upper substrate 41, piezoelectric element 44 laminated on the side opposite to the pressure chamber 45 of the vibration plate 43, and a drive section (not illustrated) for driving the piezoelectric element 44.

In this example, a photosensitive glass substrate having a thickness of 500 µm is used as the substrate 42. Etching is provided until a depth of 100 µm is reached, whereby the first liquid chamber 48, first flow path 46, pressure chamber 45, second flow path 47 and second liquid chamber 49 are formed. The first flow path 46 has a width of 25 µm and a length of 20 µm. Further, the second flow path 47 has a width of 25 µm and a length of 150 µm.

The upper substrate 41 as a glass substrate is laminated on the substrate 42, thereby forming the upper surfaces of the first liquid chamber 48, first flow path 46, second liquid chamber 49, and second flow path 47. The portions corresponding to the top surfaces of the pressure chamber 45 of the upper substrate 41 are processed by etching or the like, and have a hole formed therethrough.

A vibration plate 43 composed of a 50 µm-thick sheet glass is laminated on the top surface of the upper substrate 41. Piezoelectric element 44 composed of 50 µm-thick lead zirconate titanate (PZT) ceramic is laminated thereon.

The piezoelectric element 44 and vibration plate 43 attached thereto are vibrated by the drive voltage from the drive section, with the result that the volume of the pressure chamber 45 is increased. The first flow path 46 and second flow path 47 have the same width and depth. The second flow path is longer than the second one. In the first flow path 46, when the differential pressure is increased, a turbulent flow is produced to as to create an eddy in the flow path, with the result that resistance in the flow path is increased. In the meantime, in the second flow path 47 a laminar flow tends to be formed due to wider flow path, even if the differential pressure is increased. The percentage of changes in the flow path resistance relative to changes in differential pressure is small, as compared to that of the first flow path.

The vibration plate 43 is displaced quickly toward the inner side of the pressure chamber 45, for example, by the drive voltage for the piezoelectric element 44. With a high differential pressure being applied, the volume of the pressure chamber 45 is reduced. Then the vibration plate 43 is slowly displaced toward the outer side of the pressure chamber 45. With a low differential pressure being applied, the volume of the pressure chamber 45 is increased, and the liquid is fed toward B. Conversely, the vibration plate 43 is displaced quickly toward the outer side of the pressure chamber 45. With a high differential pressure being applied, the volume of the pressure chamber 45 is increased. Then the vibration plate 43 is slowly displaced toward the inner side of the pressure chamber 45. With a low differential pressure being applied, the volume of the pressure chamber 45 is reduced, and the liquid is fed toward A.

The difference in the percentage of the change in the flow path resistance relative to a change in the differential pressure in the first and second flow paths need not always be caused by the difference in the length of the flow paths. It can be caused by other geometric differences.

Use of the piezo-pump having the aforementioned structure allows the liquid feed direction and speed to be controlled by changing the pump drive voltage waveform, voltage value and frequency. Fig. 12(c) shows another example of this pump. In this example, the pump is composed of a silicon substrate 71, a piezoelectric device 44 and a flexible wire (not illustrated). The silicon substrate 71 is formed by processing a silicon wafer into a predetermined shape according to the known photolithography. The pressure chamber 45, diaphragm 43, first flow path 46, first liquid chamber 48, second flow path 47, second liquid chamber 49 are formed by etching. The first liquid chamber 48 is provided with a port 72, and the second liquid chamber 49 with a port 73. This pump communicates with the pump connection of the micro-reactor through these ports. For example, a substrate 74 equipped with a port is overlapped with and a portion close to the pump connection of the micro-reactor one on top of the other. This arrangement allows the pump to be connected with the micro-reactor. It also allows a plurality of pumps to be formed on one silicon substrate. In this case, a drive liquid tank is preferably connected to the port located opposite to the one connected with the micro-reactor. If there are a plurality of pumps, these ports can be connected with the common drive liquid tank.

Feed of the sample and reagent solution into the minute flow path can be accomplished as follows: The reagent 81 from the direction A of the Y-shaped diverging flow path and the sample 82 from the direction B are fed simultaneously by the operation of two pumps, as shown in Fig. 13(b). In addition to this method, the reagent 81 from the direction A of the Y-shaped diverging flow path and the sample 82 from the direction B can be fed alternately, as shown in Fig. 13(a). Thus, the reagent 81 and sample 82 are filled in round slices alternately in the flow path 84. As the pump liquid feed switching speed is increased, the width of this crosswise layer is reduced, with the result that the speed of diffusion between the reagent 81 and sample 82 is increased.

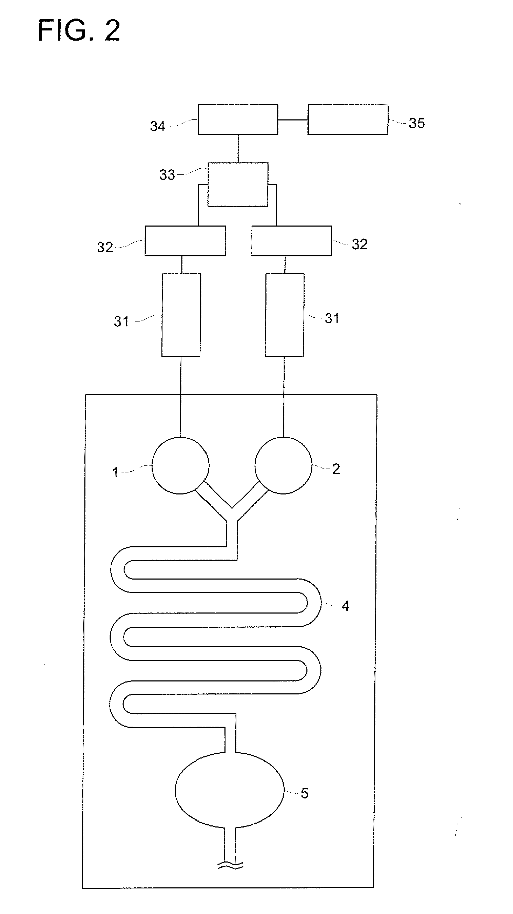

Since the width of the minute flow path 4 is limited, the liquids from the confluence section are quickly mixed by diffusion. To ensure sufficient diffusion and mixing of the reagent and sample, it is also possible to make such arrangements that the feed of the merged liquids in the minute flow path is suspended temporarily immediately before liquids are fed into the liquid reservoir 5. The micro-pump operation suspension time is preferably in the range from 0.5 sec. through 10 min. Fig. 2 shows the control system for controlling the temporary suspension of the pump. As illustrated, the micro-pump 31 is connected to the microcomputer 34 through an amplifier 32 and D/A converter 33. The aforementioned micro-pump 31, amplifier 32, D/A converter 33 and microcomputer 34 are built in the main unit separately from the chip for gene amplification reaction. A microcomputer 31 is equipped with a timer 35, and controls liquid feed suspension and restart of the micro-pump 31 at the pre-programmed timing.

To suspend the liquid feed temporarily, it is possible to arrange such a configuration that the micro-pump operation is stopped and the operation is restarted after the lapse of a predetermined time. Alternatively, a hydrophobic valve (to be described later) in Fig. 14 is provided in the vicinity of the terminal downstream from the minute flow path. After this hydrophobic valve has stopped the liquid, drive voltage is regularly applied to the pump on a continuous basis at such a pressure that prevents the liquid from moving, for some time without turning off the pump drive voltage. After the lapse of a predetermined time, the drive voltage is raised so that the liquid pressure will be equal to or greater than the permissible pressure level of the hydrophobic valve, thereby allowing the liquid mixture to be fed to the liquid reservoir.

Use of a hydrophobic valve described above prevents the liquid from being freely moved by the capillary pressure when the pump operation is suspended.
After the sample and reagent solution have been sufficiently diffused and mixed in the minute flow path, the liquid mixture is fed to the liquid reservoir 5 and is stored therein. Under this condition, the ICAN reaction is performed.

The liquid reservoir 5 is formed of a space wider than the minute flow path 4. For example, when the minute flow path is 0.2 mm wide and 0.2 mm deep, a 5.6 mm-diameter, 0.2 mm deep space is formed.

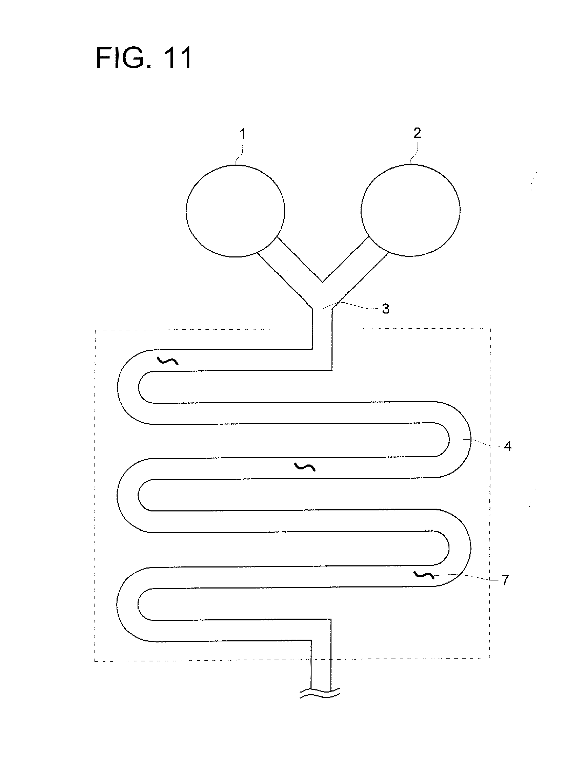

Since the minute flow path 4 has a limited width, liquids from the confluence section 3 are quickly mixed by diffusion, on the one hand. On the other hand, supply of the reaction reagent to the DNA as an object of and amplification is restricted in a one-dimensional direction along the flow path, and therefore quick reaction cannot be achieved. To put it another way, reaction speed is low in the system wherein reaction is carried out with the merged liquids suspended in the minute flow path, as shown in Fig. 11. A great deal of reaction reagent that does not contribute to amplification will be left unused.

By contrast, when the reaction is carried out in the liquid reservoir 5, such a reaction reagent as a primer is supplied to the DNA as an object of amplification from the two-dimensional direction. To be more specific, it is supplied from the entire surrounding area. This arrangement increases the probability of the DNA and reaction reagent meeting each other, whereby reaction speed is increased.

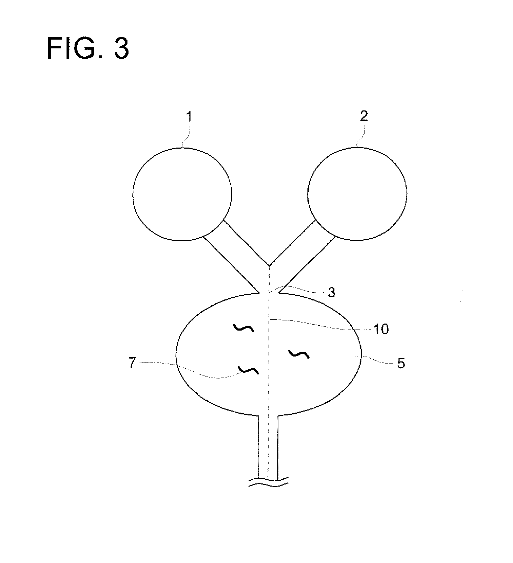

As shown in Fig. 3, if the minute flow path 4 is not provided between the confluence section 3 and liquid reservoir 5, the liquids fed from the confluence section 3 to the liquid reservoir 5 are not sufficiently diffused and are unevenly distributed starting from the interface 10, with the result that much time is required for diffusion and reaction speed is reduced.

### SECOND EMBODIMENT

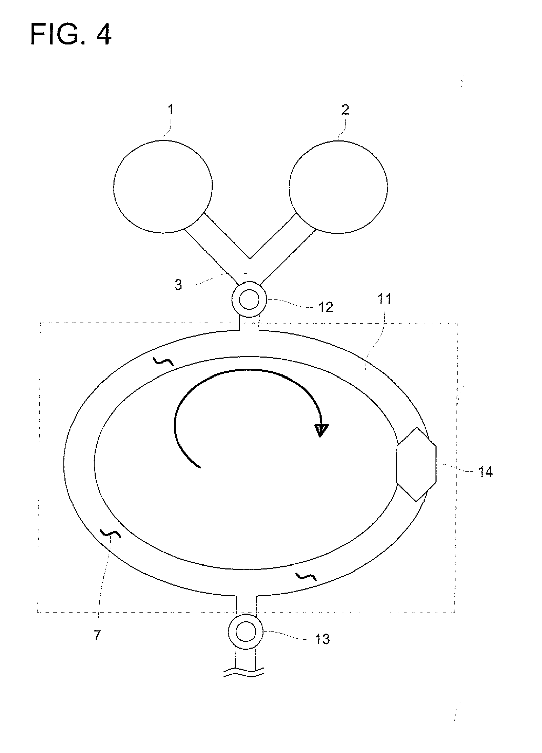

Fig. 4 is a diagram representing the arrangement of the flow path for mixing and reaction between the sample and reagent in a micro-reactor as a second embodiment of the present invention. As illustrated, the sample fed from the sample storage section 1 by the micro-pump (not illustrated) and the reagent solution from the reagent storage section 2 by the micro-pump (not illustrated) are merged at the confluence section 3 of the Y-shaped flow path, and are fed to the succeeding loop-like minute flow path 11 through a valve 12.

The sample and reagent solution filled into the loop-like minute flow path 11 are circulated by the micro-pump 14 arranged in the loop, with the loop closed by the valves 12 and 13. The reagent solution and sample running through the loop are subjected to active diffusion and mixture by circulation.

To circulate the merged liquids with the loop-like minute flow path 11 closed, valves 12 and 13 are arranged upstream and downstream from the loop-like minute flow path 11, respectively, in the present embodiment. To prevent the liquids from running out of the loop and to allow the merged liquids to be circulated with the loop closed, it is also possible to arrange such a configuration that a loop-like minute flow path 11 is arranged either downstream or upstream from the loop-like minute flow path 11. However, without a valve upstream, the liquid components may diffuse in the loop when a long time has been spent on circulation. To avoid this, valves are performed provided both upstream and downstream, as shown in Fig. 4.

The loop-like minute flow path 11 that can be used has a width of 0.3 mm wide, a depth of 0.3 mm and a loop diameter of 16.5 mm. The aforementioned piezo-pump can be used as the micro-pump 14. This pump has the dimensions of 2 mm by 0.7 mm by 0.3 mm, for example. When the aforementioned hydrophobic valve is used as the valve 13, it has a width of 0.025 mm and depth of 0.3 mm, for example. When active valves are used as the valves 12 and 13, the valve bodies have a diameter of 0.6 mm, for example.

Circulation of liquids allow the reagent solution and sample running through the loop to undergo active diffusion and mixing. At the same time, their circulation increases the probability that the DNA and the reaction reagent such as a primer will meet each other, due to the gradients of the flow velocities of the liquid in the central portion of the flow path and that in the vicinity of the wall surface, with the result that reaction speed is increased.

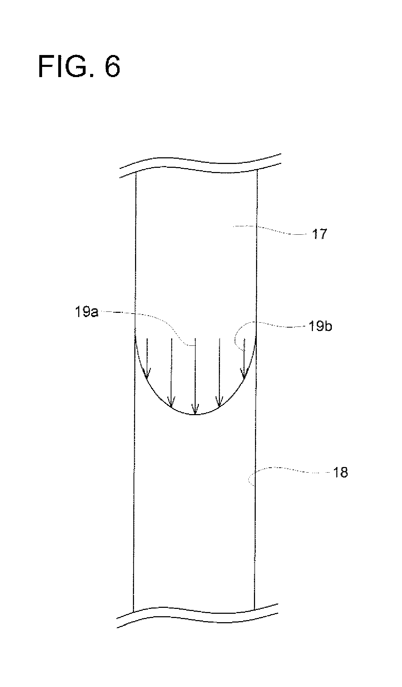

This will be described with reference to Fig. 6. The flow 19a of the liquid at the central portion of the flow path 17 is lower than the flow 19b of the liquid in the vicinity of the wall surface 18. The gradient of this flow velocity encourages the relative movement of the DNA and reaction reagent, and therefore increases the probability that DNA will meet the reaction reagents at various positions in the loop. Hence reaction is promoted.

Further, reaction efficiency can be controlled through the control of the circulation velocity and circulation time in conformity to the concentration of the sample.
Circulation in the loop may be continued in one and the same direction, or may be switched as required.

After termination of the reaction, the liquid in the loop opens the valve 13 and is fed into the flow path by the upstream micro-pump for feeding the sample or reagent. An active valve or check valve can be used as the valve 12 upstream from the loop. An active valve or the aforementioned hydrophobic valve (Fig. 14) can be used as the valve 13 downstream from the loop. When the valve is installed either upstream or downstream in the loop-like minute flow path 11, the aforementioned valve can be used in the same manner. When valves are arranged both upstream and downstream, a desired combination of these valves may be utilized.

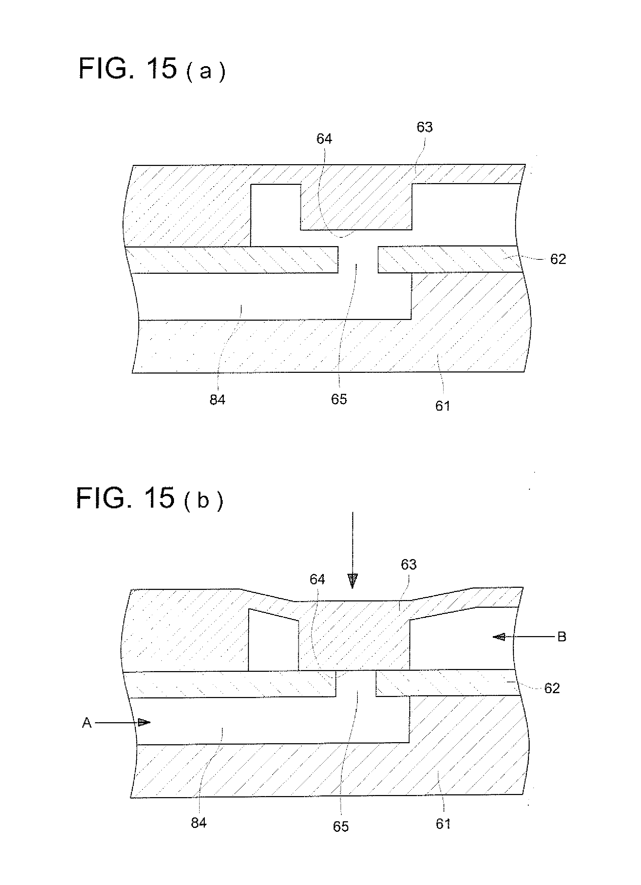

Fig. 15 is a cross sectional view representing an example of the active valve. Fig. 15(a) shows that the valve is open, while Fig. 15(b) shows that the valve is closed. In this active valve, a flexible substrate 63 with a downwardly protruding valve 64 formed thereon is laminated on the substrate 62 with an opening 65 formed thereon.

When the valve is open, the flexible substrate 63 is pushed from the top by pneumatic pressure or hydraulic pressure, or by use of a valve modification means such as a hydraulic piston, piezoelectric actuator and shape memory alloy actuator, as shown in Fig. 15(b). This procedure causes the valve 64 to be kept in close contact with the substrate 62 so as to cover the opening 65, whereby counter flow in the direction B is prevented. Further, the active valve is not restricted to the one driven by a drive apparatus; it can be designed in such a way that the valve body itself is deformed to block the flow path. In this case, the valve can be deformed by electric conduction and heating through the use of a by-metal or a shape memory alloy, for example.

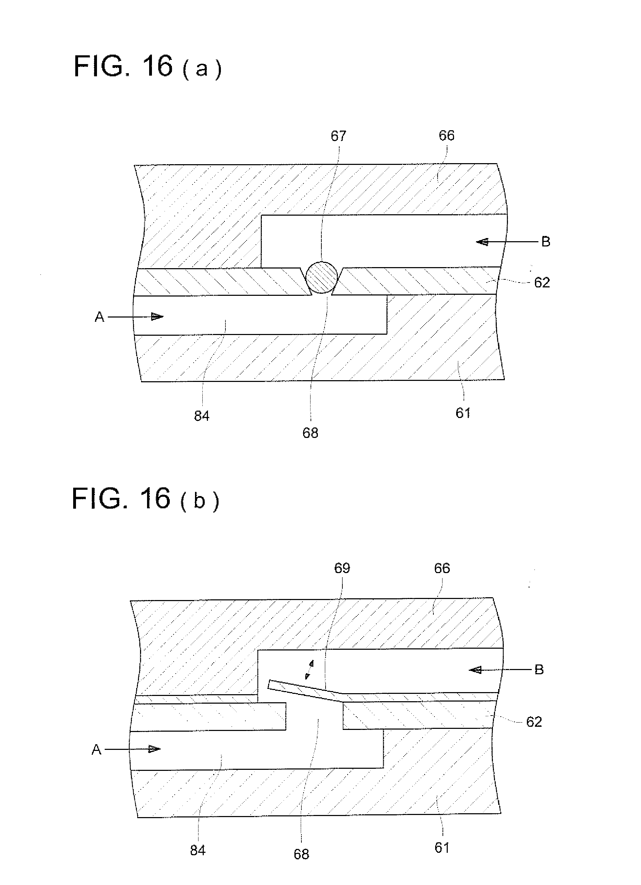

Figs. 16(a) and (b) are cross sectional views representing an example of the check valve. In the check valve shown in Fig. 16(a), the microsphere 67 is used as a valve body, and the opening 68 formed on the substrate 62 is opened or closed, whereby the passage of the liquid is enabled or disabled. To be more specific, when the liquid is fed from the direction A, the microsphere 67 is separated from the substrate 62 by liquid pressure and the opening 68 is released, with the result that the liquid is allowed to run. In the meantime, when the liquid flows backward from the direction B, the microsphere 67 is seated onto the substrate 62 and the opening 68 is closed, with the result that liquid is prevented from running.

In the check valve shown in Fig. 16(b), the flexible substrate 69, laminated on the substrate 62, whose end extends upwardly of the opening 68, is moved by the liquid pressure in the vertical direction above the opening 68. This arrangement allows the opening 68 to open or close. To put it another way, when the liquid is fed from the direction A, the end of the flexible substrate 69 is separated from the substrate 62 by liquid pressure, and the opening 68 is opened, so that the liquid is allowed to pass by. In the meantime, when the liquid is fed backward from the direction B, the flexible substrate 69 is brought into close contact with the substrate 62 and the substrate 62 is closed, so that the passage of liquid is blocked.

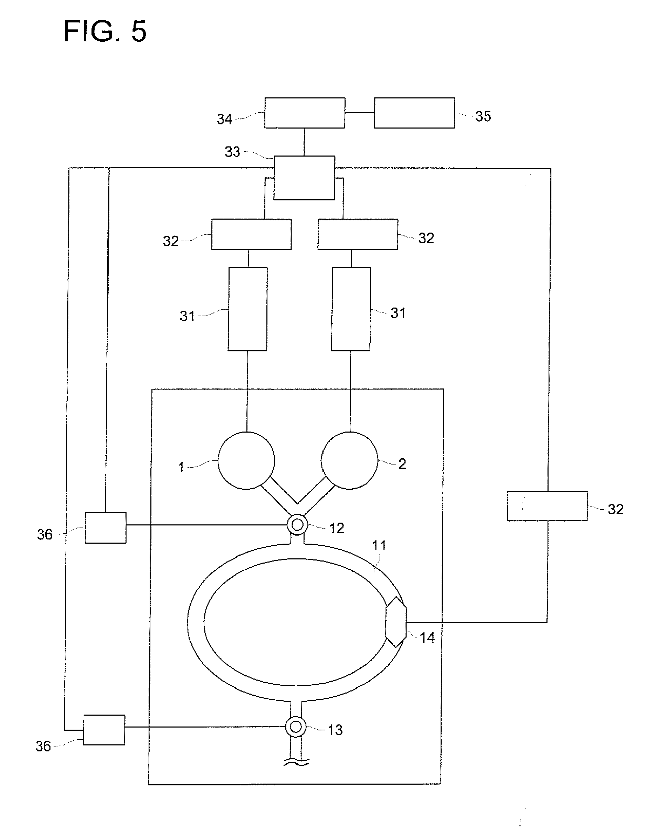

Fig. 5 is a diagram representing the control system of a micro-pump and valve. As illustrated, the liquid feed micro-pump 31 and circulating micro-pump 14 are connected to the microcomputer 34 through the amplifier 32 and D/A converter 33.

Further, the air cylinder 36 for opening and closing the valves 12 and 13 is connected to the microcomputer 34 through the D/A converter 33.
The microcomputer 31 is provided with a timer 35 and controls liquid feed by the liquid feed micro-pump 31 and circulating micro-pump 14, and open/close operation of the valves 12 and 13 at timed intervals pre-programmed in advance.

### THIRD EMBODIMENT

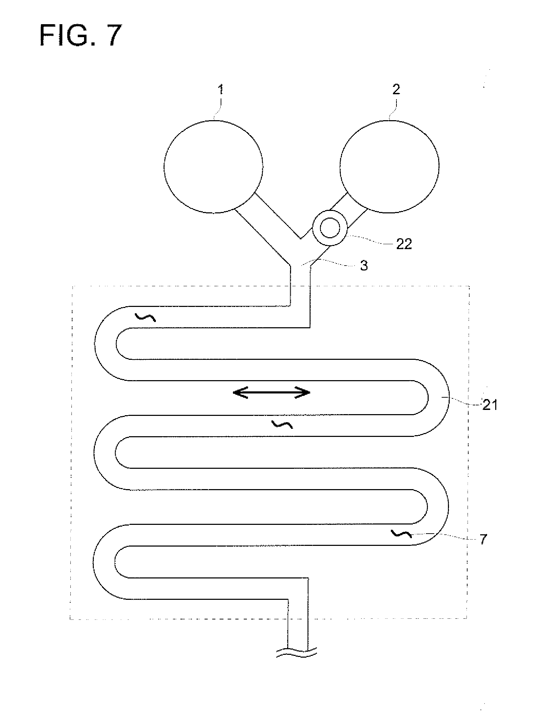

Fig. 7 is a diagram representing the configuration of a flow path for mixing and reaction of the sample and reagent in a micro-reactor as a third embodiment of the present invention. As illustrated, the sample fed by the micro-pump (not illustrated) from the sample storage section 1 and the reagent solution fed by the micro-pump (not illustrated) from the reagent storage section 2 are merged at the confluence section 3 of the Y-shaped flow path and are fed to the succeeding minute flow path 21.

The minute flow path 21 has a width of 0.2 nm and a depth of 0.2 mm. ICAN reaction is carried out in the minute flow path 21 (flow path in the area enclosed by a dotted line in the diagram).
After the minute flow path 21 has been filled with the sample and reagent solution, the micro-pump for feeding the sample is driven so as to repeatedly switch the feed direction. The merged liquids in the minute flow path 21 are moved back and forth within the minute flow path 21 so that and ICAN reaction is carried out. For example, when the minute flow path 21 has a width of 0.2 mm, a depth of 0.2 mm and a liquid quantity of 25 µl, it is sufficient that the reciprocating motion with an amplitude of 25 mm and a period of about 5 sec. is performed.

This motion in the back and forth directions causes the reagent solution and sample in the minute flow path 21 to be actively diffused and mixed. At the same time, the probability of the DNA meeting the sample is increased by the gradient of the velocities of the liquids at the central portion of the flow path and in the vicinity of the wall surface, as shown in Fig. 6, with the result that reaction velocity is increased.

Further, the flow path on the side of the reagent storage section is provided with a valve 22 to avoid counterflow, and the merged liquids in the minute flow path 21 are moved back and forth by the liquid feed micro-pump. This arrangement eliminates the need of installing a separate mixing micro-pump in the flow path. This micro-pump preferably uses a piezo-pump as shown in Fig. 12.

In Fig. 7, one of the one micro-pumps alone is operated for reciprocating motion of the merged liquids. Reciprocating motion of the merged liquids in the minute flow path 21 can be provided by the operation of the micro-pump on the side of the sample storage section and that on the side of the reagent storage section, without a valve 22 being installed.

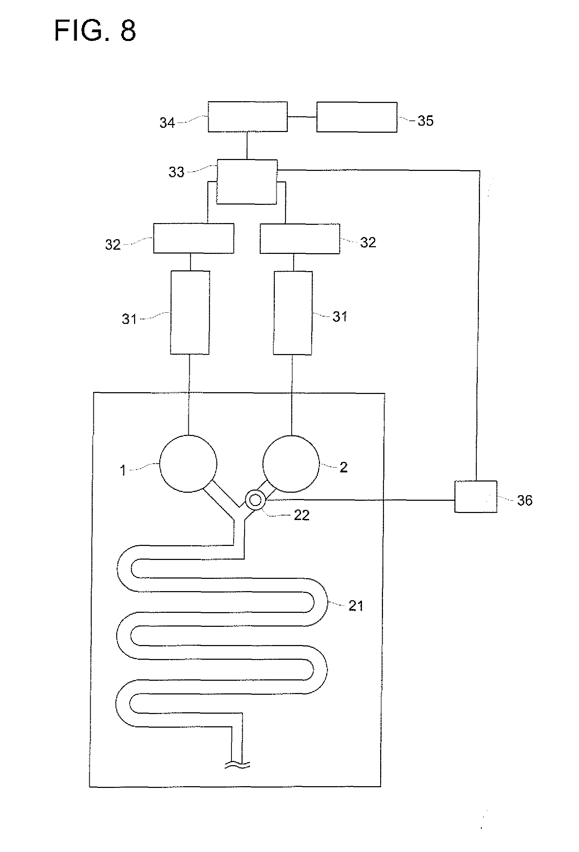

Fig. 8 is a diagram representing the control system of the liquid feed micro-pump 31 and valve 22. As illustrated, the liquid feed microcomputer 31 is connected to the microcomputer 34 through the amplifier 32 and D/A converter 33.

The air cylinder 36 for open/close operation of the valve 22 is connected to the microcomputer 34 through the D/A converter 33.

The microcomputer 31 has a timer 35 mounted thereon, and controls the liquid feed of the micro-pump 31 and the open/close operation of the valve 22 at timed intervals pre-programmed in advance.

### FORTH EMBODIMENT

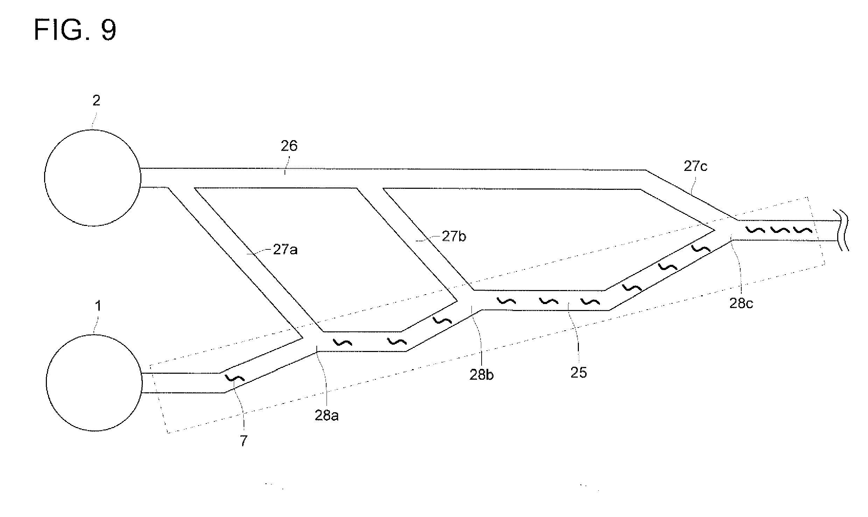

Fig. 9 is a diagram representing the configuration of a flow path for mixing and reaction of the sample and reagent in a micro-reactor as a fourth embodiment of the present invention. As illustrated, the sample from the sample storage section 1 is fed into the minute flow path 25 (enclosed by a dot line in Fig. 9) by a micro-pump (not illustrated). A plurality of divergent flow paths 27a, 27b and 27c are diverged from this minute flow path 25, and reagent solution is fed by a micro-pump (not illustrated) to these divergent flow paths 27a, 27b and 27c. The reagent solution is fed to the divergent flow paths 27a, 27b and 27c from the reagent storage section 2 through a main flow path 26.

The sample from the sample storage section 1 runs through the minute flow path 25 to reach the downstream side, and merges with the reagent solution sequentially at the confluence sections 28a, 28b and 28c, whereby amplification reaction takes place. The following describes the mixing and reagent of the sample and reagent in the minute flow path 25, according to the confluence sections 28a, 28b and 28c and the order of traveling.

When the sample fed from the sample storage section 1 has reached the confluence section 28a, it merges with reagent solution from the divergent flow path 27a. The volume of the reagent solution merged in this case is equivalent to the total volume of the reagent solution divided into each of the divergent flow paths 27a, 27b and 27c. Diffusion, mixing and amplification of the sample and reagent solution are also carried out until the leading edge of this merged liquid reaches the next confluence section 28b. Immediately before the leading edge of the merged liquids reaches the confluence section 28b, the liquid feed is stopped as required, to ensure sufficient amplification. The DNA is amplified, for example, several-fold in the merged liquids of the minute flow path 25 between the confluence sections 28a and 28b.

Then feed of the sample is resumed and the sample fed from before the confluence section 28b merges with the reagent solution fed from the divergent flow path 27b, at the confluence section 28b. Diffusion, mixing and amplification between the sample and reagent are also carried out until the leading edge of this merged liquid reaches the next confluence section 28c. Immediately before the leading edge of the merged liquid reaches the confluence section 28c, the liquid feed is stopped as required, to ensure sufficient amplification. The DNA is amplified, for example, further several-fold in the merged liquids of the minute flow path 25 between the confluence sections 28b and 28c. In the meantime, the continuously succeeding sample has reached the confluence section 28a, it merges with the reagent solution fed from the divergent flow path 27a. In the same manner as above, diffusion and mixing between the sample and reagent, and amplification thereof are carried out. The DNA is amplified, for example, several-fold in the merged liquids of the minute flow path 25 between the confluence sections 28a and 28b.

Then liquid sample feed is resumed. The sample fed just before the confluence section 28c merges with the reagent solution fed from the divergent flow path 27c at the confluence section 28c. In the same manner as above, diffusion and mixing between the sample and reagent, and amplification thereof are carried out. The DNA is amplified, for example, several-fold in the merged liquids of the minute flow path 25 located forwardly of the confluence section 28c. In the meantime, in the same manner as above, the DNA is amplified in the merged liquids of the minute flow path 25 between the confluence sections 28a and 28b, and between the confluence sections 28b and 28c.

As described above, reagents are divided, and are merged stepwise from a plurality of confluence sections 28a, 28b and 28c so that the DNA is gradually amplified. As compared to the case of merging the sample and reagent in a single step at one confluence section, for example, the method according to the present embodiment increases the probability of the DNA and reaction reagent meeting each other, and brings about a substantial improvement in reaction efficiency. To put it another way, in a reaction that proceeds based on the reaction substance (DNA to be amplified) of lower concentration as in gene amplification and the reaction substance (amplified DNA) obtained from reaction, if the reagent solution and sample are merged and mixed in one operation, the concentration of the DNA as a basis for reaction will be reduced to an excessive degree. To avoid this, the reagent solution is gradually added to increase the amount of the reaction substance (DNA) serving as a basis. During this process, reaction is carried out. This arrangement improves overall reaction efficiency.

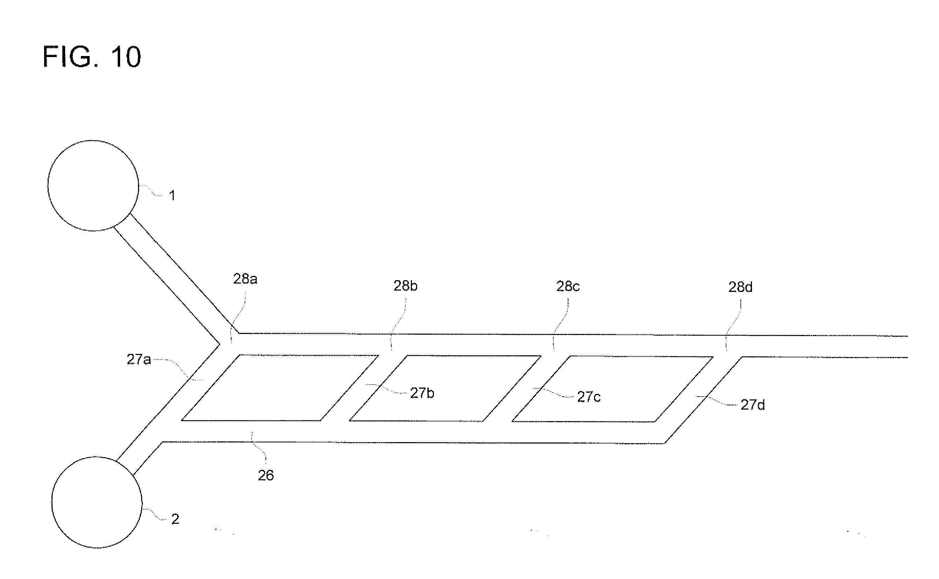

Fig. 10 is a diagram showing a variation of the flow path configuration for mixing and reaction of the sample and reagent in the micro-reactor of the present embodiment. In the flow path configuration of this diagram, the sample from the sample storage section 25 is fed to the minute flow path 25, similarly to the case shown in Fig. 9. The reagent solution from the divergent flow paths 27a through 27d is merged by stages from the confluence sections 28a through 28d. While the DNA is efficiently amplified in the minute flow path 25, the liquid is fed downstream. In this example, the flow path has a width of 0.2 mm and a depth of 0.2 mm. The minute flow path 25 between confluence sections has a length of 30 mm, and the divergent flow path 27 has a length of 3 mm.

Similarly to the cases shown in Figs. 2, 5 and 8, the present embodiment is provided with control system for controlling the temporary suspension of the micro-pump. The microcomputer 34 temporarily suspends liquids in the minute flow path 25 just before the confluence section 28, whereby reaction is carried out.

It should be understood that the description in the aforementioned embodiments refers to preferred examples of the micro-reactor according to the present invention, without the prevent invention being restricted thereto. The aforementioned embodiments can be changed and modified as needed, without departing from the spirit of the invention, and such changes and modifications are included in the present invention. To be more specific, the structure, arrangement, layout, geometric configuration, dimensions, material, system and method regarding the micro-reactor according to the present invention can be embodied in a great number of variations partly or wholly, without departing from the spirit of the invention.

The following describes the micro-reactor to which the configuration of the present invention is applicable, as well as the micro-reactor arranged suitable for the gene amplification process and gene detection process.
The micro-reactor comprises a chip made of resin, glass, silicon, ceramic or others. This chip is provided with a reagent storage section, flow path, pump connection, reagent determining section, mixing section and reaction section, for example, at functionally appropriate positions by micromachining. A micro-reactor for gene detection further contains a probe DNA storage section, control storage section and, if required, a reverse transcription enzyme storage section.

The aforementioned micro-reactor has a pump connection preferably arranged on the upstream portion of each reagent storage section with reagent stored therein. This pump connection is connected with a micro-pump and the drive liquid is supplied from each micro-pump, whereby the reagent is pushed from the reagent storage section to the flow path, so that a predetermined reaction and synthesis are carried out.

In the micro-reactor for gene detection, the sample storage section communicates with the sample injection section and is responsible for temporary storage of the sample and supply of the sample to the mixing section. It can be arranged to be responsible for separation of blood cells if required. Mixing between reagents, and between reagent and sample may be performed at a desired proportion in a single mixing section. Alternatively, either or both of them may be divided into small portions and a plurality of confluence sections may be provided, so that mixing is performed in such a way that a desired proportion is obtained in the final step. The actuator operation is preferably controlled in response to the drive signal of the drive apparatus of the micro-pump, thereby ensuring that reagents are mixed at a desired proportion.

Such a sample as blood is injected into the aforementioned sample storage section, and a predetermined reaction -- for example, synthesis reaction, chemical reaction, antigen-antibody reaction, gene amplification reaction, and processing required for detection -- is automatically carried out in the micro-reactor. Thus, detection of multiple items can be carried out in a short time according to the arrangement of the present invention. In an embodiment preferable for the use of the micro-reactor of the present invention, predetermined volumes of required reagents are filled in advance, and are used for each sample. For example, the micro-reactor for gene detection is used as a unit for amplification reaction between the DNA of the sample (including the DNA obtained by creating the RNA extracted from the sample by reverse transcription) and DNA amplification reagents, as well as for the detection of amplified products.

The micro-reactor of the present invention includes the one employed by connection with a chip having a flow path and others formed thereon, the one having the chip incorporating a built-in micro-pump, and the one equipped with a control system for controlling a micro-pump and valve as well as the chip. Further, the micro-reactor can be arranged in such a way that reaction and detection are carried out by a chip mounted on a separate apparatus proper equipped with a micro-pump. This apparatus proper comprises a control system for controlling the liquid feed, temperature and reaction, and a unit responsible for optical detection, data collection and data processing. When used for gene detection, the use of this apparatus proper is shared by samples to be inspected, if it is equipped with a chip. This arrangement ensures efficient and quick processing despite the presence of multiple samples.

All the components of the aforementioned micro-reactor are downsized, and the micro-reactor is designed for easy portability and excellent workability and maneuverability, without being restricted for the place and time for use.

Use of the micro-reactor of the present invention provides preferable reaction of gene amplification by mixing:
a sample including a cDNA obtained by synthesis of a sample, a DNA extracted from the sample or a RNA extracted from the sample, through reaction of reverse transcription; and
a reagent solution including the reaction solution.

- Sample
   The sample as an object to be tested is a gene as a nucleic acid serving as a template for amplification reaction, in the case of gene detection, DNA or RNA. It can be the one obtained by preparation or isolation from the sample that may contain such a nucleic acid. There is no restriction on the method for preparing the DNA or RNA from such a sample; a prior art method can be utilized. For DNA amplification, a technique has been developed in recent years to prepare a gene, DNA or RNA from a living sample. It is currently available in the form of a kit.

No restriction is imposed on the sample itself. The sample includes:
almost all samples derived from a living organism such as whole blood, serum, buffy coat, urine, fecal, saliva and sputum;
nucleic acid-containing samples such as a cell culture, virus, bacteria, mildew, yeast, plant and animal;
samples that may be mixed with or may contain a microorganism and others; and
all other samples that may contain other nucleic acid.

A DNA can be separated and refined by phenol/chloroform extraction and ethanol sedimentation according to the normal method. To liberate a nucleic acid, it is commonly known to use a high-concentration chaotropic reagent such as guanidine hydrochloride and isocyanate close to saturated concentration.

For the RNA, there is no restriction if the primer used for reverse transcription can be produced. In addition to all RNAs in the sample, examples are found in the molecular group of RNAs including the RNA of a retrovirus working as a gene, mRNA as a direct information carrier of the discovered gene, and rRNA. These RNAs are converted into the cDNA using an appropriate reverse transcription enzyme, before they are analyzed. The mRNA can be prepared according to the prior art. The reverse transcription enzyme is readily available.

As compared with the method of manual work using the prior art apparatus, the method according to the micro-reactor of the present invention requires only a very small amount of sample. In the case of gene, for example, the required volume of DNA is 0.001 through 100 ng. Accordingly, even when only a trace quantity of sample is available, the micro-reactor of the present invention does not require the process of enhancing the concentration of the sample in a pre-processing step.
- Amplification method
   In the micro-reactor of the present invention, no restriction is imposed on the method of amplification. For example, the PCR amplification method in active use over a wide range of various fields can be utilized as the DNA amplification art. Various conditions for use of the amplification art have been studied. Together with improvements, these conditions are disclosed in various documents. The PCR amplification requires temperature control for rise of three temperatures. A flow path device for allowing a microchip to provide appropriate temperature control has already been proposed by the present inventors (Official Gazette of Japanese Patent Tokkai 2004-108285). This device system can be used in the amplification flow path of the micro-reactor according to the present invention. This arrangement allows the thermal cycle to be switched so that the minute flow path can be used as a micro-reaction cell of small heat capacity. Thus, the DNA amplification requires much shorter time than the prior art manual method of using a micro-tube or micro-vial.

In the recently-developed ICAN (Isothermal chimera primer initiated nucleic acid amplification) method that does not require such a complicated temperature control as PCR reaction, the DNA amplification can be achieved in a short time at a desired constant temperature in the range from 50 through 65°C (Patent No. 3433929). Accordingly, the ICAN method is simple temperature control in the micro-reactor according to the present invention. Whereas this method requires one hour in manual work, the entire work including analysis is completed in ten to twenty minutes, preferably fifteen minutes when the bioreactor of the present invention is used.

Another PCR modified method can be used for the DNA amplification reaction. The micro reactor for the present invention is flexible enough to any method through design modification of the flow path. When DNA amplification reaction according to any method is used, the details of the art is disclosed to permit easy introduction by those skilled in the art.
- Reagents
   (i) Primer
      The PCR primer is a complementary oligonucleotide on both terminals of the DNA chain at a specific site to be amplified. Special-purpose application for the design is already developed, so that it can be easily fabricated by those skilled in the art by DNA synthesizer and chemical synthesis. The primer for the ICAN method is a DNA and RNA chimera primer. Its preparation art is already established in technical terms (Pat. No. 3433929). The success and efficiency of amplification reaction depend on the design and selection of the primer, and the appropriate primer must be designed and selected with utmost care.

Combination of the primer with biotin allows the DNA as a by-product to be immobilized on the substrate through the combination with streptoavidin, so that a predetermined volume of amplification product can be provided. Digoxigenin and various types of fluorescent pigment can be exemplified as the primer labeling substances.
(ii) Reagent for amplification reaction
   The reagent chemicals including the enzyme used for amplification reaction are readily available for both PCR and ICAN method.

Reagents for the PCR method include at least Taq DNA polymerase, Vent DNA polymerase or Pfu DNA polymerase, n addition to 2'-deoxynuoleotide 5'-triphosphate.

The reagent chemicals according to the ICAN method include at least 2'-deoxynucleotide 5'-triphosphate, chimera primer that can be specifically hybridized with the gene to be detected, DNA polymerase of chain labilization, and R Nase of endonuclease.
(iii) Control
   The internal control is used for internal standard substance in the monitoring of amplification and quantitative determination of target nucleic acids (DNA and RNA).
   Internal control is sequenced in such a way that the same primer as the sample primer can be hybridized on both sides of the sequence different from that of a sample. This allows amplification to be performed in the same way as the sample. Sequencing of the positive control is specific for detecting a sample. The portion where the primer is hybridized and the sequence therebetween are the same as those of the sample. The nucleic acids (DNA and RNA) used for control can be the ones disclosed in published technical documents. Negative control includes all the reagents except for nucleic acids (DNA and RNA), and is used to check contamination and to correct the background.
(iv) Reverse transcription reagent
   For RNA reagent, a reverse transcription enzyme to synthesize cDNA from RNA and a reverse transcription primer are used. They are readily available on the market.

The aforementioned reagent storage section of one micro-reactor contains a predetermined amount of such an amplification substrate (2'-deoxynucleotide 5'-triphosphate) and gene amplification reagent. Thus, the micro-reactor of the present invention does not require a required amount of reagent to be filled every time it is used. The micro-reactor is ready for use at any moment.
- Detection process
   No restriction is imposed on the method of detecting the DNA of the amplified target gene. Any preferred method can be employed as required. Such methods typically include visible spectrophotometry, fluorescent photometry and luminescence method. Further examples are provided by electrochemical method, surface plasmon resonance method and crystal oscillator microbalance method.

The following shows some examples of the processes for amplification and detection using temperature micro-reactor: (1) a process wherein samples are fed from the storage sections thereof, and the gene is amplified in the minute flow path, the aforementioned samples including a cDNA obtained by synthesis of a sample, a DNA extracted from the sample or a RNA extracted from the sample, through reaction of reverse transcription, and a primer subjected to biotin modification; (2) a process wherein the reagent solution for amplification containing the gene amplified in the minute flow path is mixed with the denaturing liquid, and the amplified gene is denatured and formed into a single strand; (3) a process wherein the processing solution for denaturing the amplified gene into a single strand are fed into a minute flow path impregnated with streptoavidin, the aforementioned amplified gene being immobilized; (4) a process wherein the probe DNA with the terminal thereof fluorescent-labeled by FITC (fluorescein isothiocyanate) is fed into the minute flow path with the amplified gene immobilized therein, and this DNA is hybridized with the immobilized gene; (5) a process wherein a gold colloid solution with the surface thereof modified by the FITC antibody specifically bonded with the FITC is fed into the aforementioned minute flow path, and the gold colloid is adsorbed by the FITC modified probe hybridized with the gene immobilized thereby; and (6) the concentration of the gold collide in the aforementioned minute flow path is optically measured.

A process of feeding a cleaning solution into the aforementioned flow path having adsorbing the streptoavidin is preferably included between the aforementioned processes, as required. A buffer solution, aqueous solution of salts or organic solvent, for example, can be preferably used as such a cleaning solution.

A preferred detection method allows measurement to be made by visible light in the final stage with a high degree of sensitivity. As compared with fluorescent photometry, this method is characterized by a more versatile instrument, easier data processing and less disturbing factors. Preferably, detection is performed by a gene detection apparatus integrally incorporating an optical detection apparatus for this purpose, together with a liquid feeding means including the aforementioned micro-pump and a temperature controller for controlling the temperature of each reaction in the flow path of the micro-reactor.

In the aforementioned processes, the denaturing solution is a reagent for converting the gene DNA into a single strand DNA. For example, such solution includes the solution of sodium hydroxide and potassium hydroxide. The probe includes oligodeoxynucleotide, for example. In addition to FITC, a fluorescent substrate such as RITC (rhodamine isothiocyanate) can be mentioned.

In the aforementioned amplification and detection, the apparatus proper integrally incorporating the aforementioned micro-pump, detection apparatus and temperature controller is operated according to the software containing information on the control of the micro-pump and temperature as well as the preset conditions on the order of liquid feed, capacity and timing, using a chip removably mounted on this apparatus proper. When the sample is injected, analysis is preferably initiated, and gene amplification reaction according to the steps of feeding and mixing the sample and reagent, gene detection reaction and optical measurement are carried out automatically in a series of continuous processes. Measurement data, together with the required conditions and record items, is stored in a file.

## Claims

1. A micro-reactor, comprising:
a flow jointing section to joint flows of at least two kinds of liquids including a reacting reagent by feeding the two kinds of liquids with a micro pump;
a mixing flow path connected to a downstream end of the flow jointing section so as to diffuse and mix the liquids; and
a reaction advancing section to advance the reaction among the mixed liquids.

2. The micro-reactor of claim 1, wherein the reaction advancing section is a liquid reservoir which is arranged at the downstream end of the mixing flow path, has a space wider than the mixing flow path, and stores the mixed liquids mixed in the mixing flow path.

3. The micro-reactor of claim 2, wherein the reaction advancing section comprises:
a control section to control the micro pump in such a way that after the micro pump feeds the liquids from the flow jointing section to the mixing flow path, the micro pump stops feeding the liquids to the mixing flow path for a moment just before the mixed liquids enter the liquid reservoir.

4. The micro-reactor of claim 3, wherein the control section control the micro pump to stop feeding for 0.5 seconds to 10 minutes.

5. The micro-reactor of claim 1, wherein the reaction advancing section comprises a loop-shaped mixing flow path in which the reaction takes place among the mixed liquids, a valve provided an upstream side and/or a downstream side of the loop-shaped mixing flow path, and a circulating micro pump provided in the loop-shaped mixing flow path to circulate the mixed liquids in the loop-shaped mixing flow path which forms a closed loop by the valve.

6. The micro-reactor of claim 1, wherein the reaction advancing section comprises a control section to control the micro pump to change the flow direction of the mixed liquids fed from the flow jointing section in the mixing flow path so as to flow repeatedly forwardly and backwardly.

7. The micro-reactor of claim 1, wherein reaction advancing section comprises a mixing flow path to which DNA liquid containing DNA as an object to be amplified is fed by a micro-pump; and
a plurality of branch flow paths, branched from the mixing flow path, to which reaction reagent is fed by the micro-pump;
wherein the reaction reagents from the branch flow paths are sequentially merged with the DNA liquid fed through the mixing flow path, and reaction of gene amplification is carried out.

8. The micro-reactor of claim 7, further comprising:
a control section for controlling each micro-pump so that the DNA liquid and the reagent liquid are merged at a flow jointing section and when the mixed liquids have reached just before a next flow jointing section, the feed of the merged liquids is suspended for a moment.

9. The micro-reactor of claim 1, wherein the micro-pump comprises:
a first flow path for allowing the flow path resistance to change in conformity to differential pressure;
a second flow path where the ratio of changes in the resistance of the flow path in response to changes in differential pressure is smaller than that of the first flow path;
a pressure chamber connected to the first and second flow paths;
an actuator for changing the internal pressure of the pressure chamber; and
a drive apparatus for driving the actuator.

10. The micro-reactor of claim 9, wherein the operation of the actuator is controlled by the drive signal from the drive apparatus of the micro-pump, whereby liquids containing the compound subjected to reaction are mixed at a desired percentage.

11. The micro-reactor of claim 1, wherein a DNA storage section for storing the aforementioned DNA liquid, and a reagent storage section for storing the reagent liquid are arranged in each flow path located upstream from the flow jointing section for merging between the DNA liquid containing DNA as an object to be amplified and reagent liquid; and the micro-pumps are connected to the pump connections so that drive liquid is supplied from each micro-pump, whereby the DNA liquid and reagent liquid are pushed out and merged to initiate gene amplification reaction.

12. The micro-reactor of claim 1, wherein he reaction of gene amplification to be carried out by mixing the sample, the DNA liquid extracted from the sample or the cDNA liquid synthesized by reverse transcription from the RNA extracted from the sample, and the reagent liquid including the reaction reagent.
